(19)

Europäisches
Patentamt
European
Patent Office
Office européen
des brevets

(11) **EP 2 112 464 B1**

(12) **EUROPEAN PATENT SPECIFICATION**

(45) Date of publication and mention
of the grant of the patent:
**07.07.2010 Bulletin 2010/27**

(51) Int Cl.:
***G01B 9/02*** *(2006.01)*          ***G01S 3/786*** *(2006.01)*

(21) Application number: **09158412.8**

(22) Date of filing: **22.04.2009**

(54) **Tracking type laser interferometer**

Selbstnachführendes Laserinterferometer

Interféromètre laser de type suivi

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **22.04.2008 JP 2008111235**

(43) Date of publication of application:
**28.10.2009 Bulletin 2009/44**

(73) Proprietor: **Mitutoyo Corporation
Kawasaki-shi
Kanagawa 213-8533 (JP)**

(72) Inventor: **Yamagiwa, Takashi
Ibaraki 305-0854 (JP)**

(74) Representative: **Grünecker, Kinkeldey,
Stockmair & Schwanhäusser
Anwaltssozietät
Leopoldstrasse 4
80802 München (DE)**

(56) References cited:
**US-A- 5 331 263          US-A- 5 684 374
US-A1- 2007 024 861**

- **FORNARO R J ET AL: "A high-performance
machine tool controller" 2 October 1988
(1988-10-02), 19881002; 19881002 - 19881007,
PAGE(S) 1429 - 1439 , XP010519269 * page 1433;
figure 5 ***
- **NOE PEREZ-ARREORTUA ET AL: "Novel non
linear PD controller for the positioning system of
a 2D Automated Visual Inspection Machine for
Quality Control of SMD" 1 November 2006
(2006-11-01), IEEE INDUSTRIAL ELECTRONICS,
IECON 2006 - 32ND ANNUAL CONFERENCE ON,
IEEE, PISCATAWAY, NJ, USA, PAGE(S) 442 -
447 , XP031077623 ISBN: 978-1-4244-0135-2 * the
whole document ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a tracking type laser interferometer for tracking a moving body to measure a displacement and/or position of the moving body with high accuracy, and in particular to a tracking type laser interferometer equipped with a servo mechanism capable of increasing a tracking speed.

Japanese Published Unexamined Patent Application No. 2007-57522 (hereinafter referred to as Patent Document 1) and Japanese Published Unexamined Patent Application No.2002-98510 (hereinafter, referred to as Patent Document 2) have disclosed a tracking type laser interferometer for tracking a moving body to measure a displacement and/or position of the moving body with high accuracy.

Hereinafter, a description will be given of a constitution and a principle of the tracking type laser interferometer in accordance with Patent Document 1. It is noted that the constitution and the principle disclosed in Patent Document 2 are similar to those disclosed in Patent Document 1.

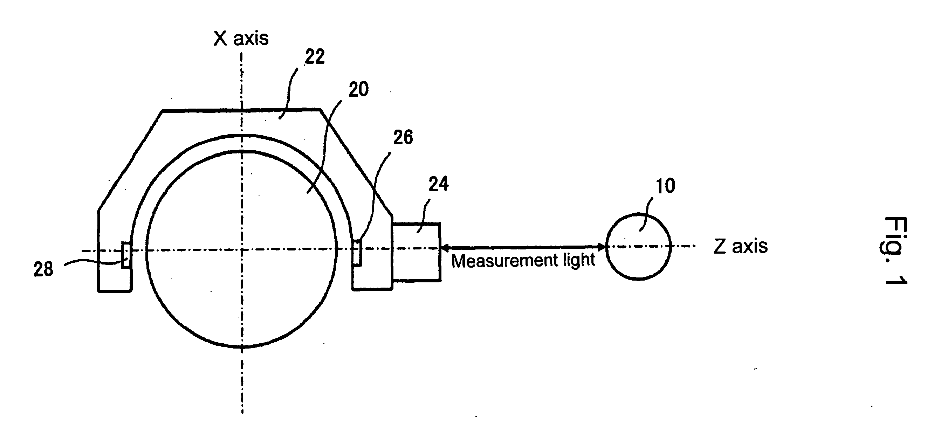

Fig. 1 shows an arrangement of an optical system given in Patent Document 1. A retroreflector 10 is mounted on a moving object to be measured, and a carriage 22 is arranged so as to rotate around a reference ball 20 which is fixed and placed as a turning center. A laser interferometer 24 which outputs a displacement signal according to a displacement of the retroreflector 10 is provided on the carriage 22. Further, the laser interferometer 24 is provided with a position detector (not illustrated) for outputting a positional signal depending on a deviation thereof (referred to as tracking deviation) when a laser beam (referred to as measurement light) which returns from the retroreflector 10 to the laser interferometer 24 is deviated in a direction orthogonal to the optical axis thereof. On movement of the retroreflector 10, a controller (not illustrated) controls the rotation of the carriage 22 so that the tracking deviation becomes zero, thereby conducting an automatic tracking. Then, a principle of three-side length measurement can be used to obtain a three-dimensional coordinate value of the retroreflector 10. In Fig. 1, the numerals of 26 and 28 represent displacement gauges for detecting the displacement in a direction of measurement light of the carriage 22 with respect to the reference ball 20.

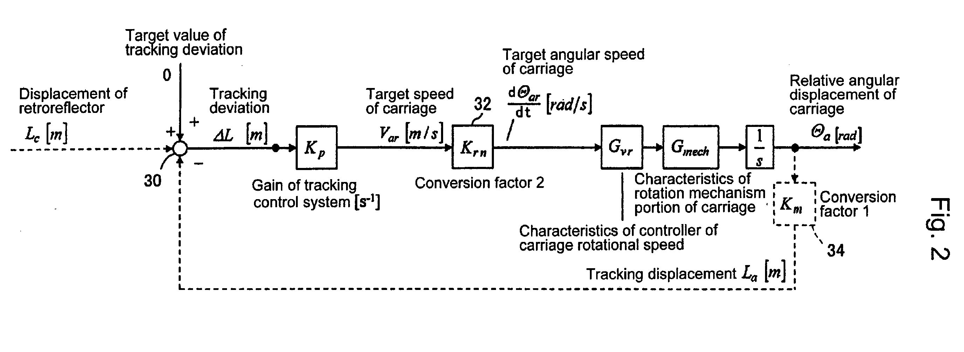

Fig. 2 is a linear block diagram showing a principle of the tracking control system. The following are reference numerals used in Fig. 2.

$L_c$: displacement (m:meter) of retroreflector 10

$L_a$: tracking displacement (m) of retroreflector 10 (when an intersection point of laser light path with retroreflector 10 is given as irradiation portion, displacement (m) of the irradiation portion developed when the carriage 22 is subjected to rotation of angular displacement $\Theta_a$ is given as tracking displacement)

$\Theta_a$: relative angular displacement (rad) with respect to angular displacement of carriage 22 where tracking displacement $L_a$ is zero $\Delta L$: tracking deviation (m) of conventional technology (a difference between displacement $L_c$ of retroreflector 10 and tracking displacement $L_a$)

Kp: gain of tracking control system ($s^{-1}$)

$V_{ar}$: target speed (m/s) of carriage 22

$d\Theta_{ar}/dt$: target angular speed (rad/s) of carriage 22

D: distance (m) between laser interferometer 24 and retroreflector 10 which is measured by laser interferometer 24

$K_m$: conversion factor 1 (m/rad) for converting angular displacement $\Theta_a$ of carriage 22 to tracking displacement $L_a$ of retroreflector 10

$K_{rn}$: conversion factor 2 (rad/m) for converting tracking displacement $L_a$ of retroreflector 10 to angular displacement $\Theta_a$ of carriage 22 (set as $K_{rn} = 1/(Dsin\Theta_a)$, which is a parameter set on a tracking control system

$G_{vr}$: characteristics of controller at rotational speed of carriage $G_{mech}$: characteristics of rotation mechanism portion of carriage 22

Here, characteristics $G_{mech}$ of the rotation mechanism portion of the carriage may be typically expressed as given in the following expression.

$$G_{mech} = \omega_n^2 / (s^2 + 2\zeta\omega_n s + \omega_n^2) \quad \dots \quad (1)$$

In the above expression, $\omega_n$ and $\zeta$ respectively denote a natural angular frequency (rad/s) and a damping ratio in a vibration mode included in characteristics $G_{mech}$ of a mechanism portion.

In the drawing, the numeral 30 represents an adder; 32, a converter of conversion factor 2 ($K_{rn}$); and 34, a converter of conversion factor 1 ($K_m$).

In Fig. 2, a tracking deviation $\Delta L$ can be observed by using a position detector, while a signal of a displacement $L_c$ of a retroreflector 10 or that of a tracking displacement $L_a$ of the retroreflector 10 cannot be observed (corresponding signals are indicated by broken lines).

However, conventional technologies disclosed in Patent Documents 1 and 2 have the following problems.

(1) A tracking deviation $\Delta L$ is increased with an increase in moving speed of the retroreflector 10 mounted on a moving body. And where the tracking deviation $\Delta L$ increases and exceeds a detection range of the position detector for detecting a tracking deviation, it is impossible to gain a normal tracking control.

(2) In order to decrease a tracking deviation $\Delta L$, it is necessary to increase a gain $K_p$ of a tracking control system. A vibration mode of a mechanism portion inside a tracking control system imposes restrictions on increase in gain, thereby posing a problem with an increase in tracking speed of the tracking type laser interferrometer.

The present invention has been made in order to solve the above problem, and an object of which is to provide a servo mechanism for reducing a tracking deviation independently of a gain of a tracking control system, thereby increasing a tracking speed of the tracking type laser interferometer.

The present invention is a tracking type laser interferometer in which a laser beam is irradiated to a retroreflector 10, or an object to be measured, from a laser interferometer 24 mounted on a carriage 22 arranged so as to rotate around a turning center which is fixed and placed, interference of the laser beam reflected in a returning direction by the retroreflector 10 is utilized to detect a displacement of the retroreflector 10 and a tracking deviation detected as positional change of an optical axis of the laser beam is used to carry out tracking, thereby controlling the rotation of the carriage 22, and the tracking type laser interferometer which is provided with a servo mechanism comprising

means for adding a tracking deviation $\Delta L_f$ to a signal obtained by multiplying a relative angular displacement $\Theta_a$ of the carriage 22

by a nominal value $K_{mn}$ of a conversion factor $K_m$, thereby calculating an estimated value $L_c^*$ of displacement of the retroreflector 10, means for multiplying the estimated value $L_c^*$ of displacement of the retroreflector 10 by a compensation gain $K_f$ which is given as $0 < K_f < 1$ and differentiating the same to generate a compensation signal $V_f$ of target speed of the carriage 22, and

means for adding a compensation signal $V_f$ to a signal obtained by multiplying the tracking deviation $\Delta L_f$ by a gain $K_p$ of the tracking control system to generate a target speed $V_{ar}$ of the carriage 22, thereby solving the above problem.

In this instance, the means for calculating the estimated value $L_c^*$ of displacement of the retroreflector 10 may include a multiplier (or constant multiplier) 40 for multiplying the relative angular displacement $\Theta_a$ of the carriage 22 by the nominal value $K_{mn}$ of the conversion factor $K_m$ and an adder 42 for adding the tracking deviation $\Delta L_f$ to an output signal of the multiplier 40.

Further, the means for generating the compensation signal $V_f$ of target speed of the carriage 22 may include a multiplier (or a constant multiplier) 44 for multiplying the estimated value $L_c^*$ of displacement of the retroreflector 10 by the compensation gain $K_f$ which is given as $0 < K < 1$ and a differentiator 46 for differentiating the same.

Still further, the means for generating the target speed $V_{ar}$ of the carriage 22 may include an adder 48 for adding the compensation signal $V_f$ to a signal obtained by multiplying the tracking deviation $\Delta L_f$ by the gain $K_p$ of the tracking control system.

Further, the servo mechanism may be provided with a vibration control compensator 50 for suppressing a vibration mode included in characteristics $G_{mech}$ of a mechanism portion inside the tracking control system.

Still further, the vibration control compensator 50 may be given as a lowpass filter.

In addition, the vibration control compensator 50 may be given as a compensator having phase-lead-lag characteristics.

According to the present invention, a servo mechanism for reducing a tracking deviation independently of gain of a tracking control system is provided, by which a tracking type laser interferometer is increased in tracking speed.

Fig. 1 is a drawing which shows an arrangement of an optical system proposed by the present applicant in Patent Document 1.

Fig. 2 is a linear block diagram of a tracking control system given in Fig. 1.

Fig. 3 is a linear block diagram of a tracking control system of a first embodiment of the present invention.

Fig. 4 is also a linear block diagram of a tracking control system of a second embodiment of the present invention.

Fig. 5 is a drawing which shows the effect of the present invention.

Hereinafter, a description will be given in detail of the embodiments of the present invention.

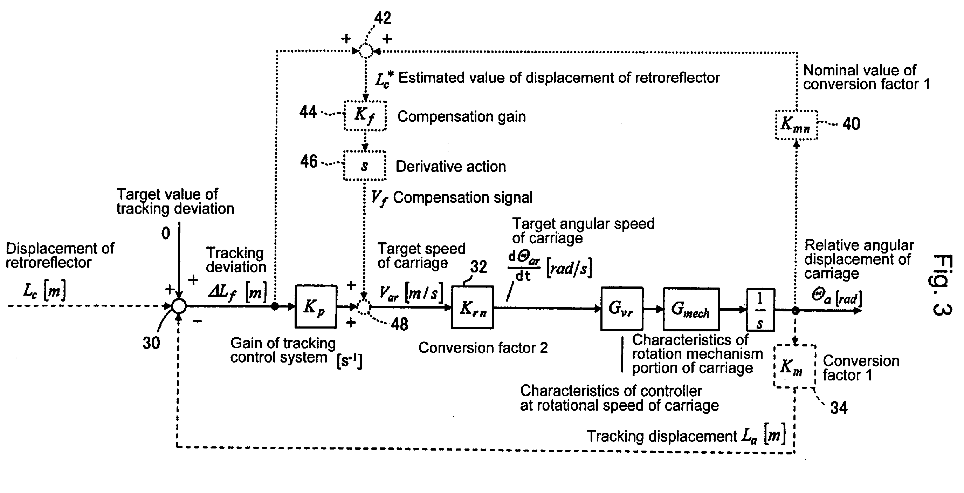

The first embodiment of the present invention is that in which, to a conventional servo mechanism as shown in Fig. 2, as shown in Fig. 3, a multiplier (or a constant multiplier) 40 for multiplying a relative angular displacement $\Theta_a$ of the carriage 22 by nominal value $K_{mn}$ of a conversion factor $K_m$, an adder 42 for adding a tracking deviation $\Delta L_f$ output from the adder 30 to an output signal of the multiplier 40 to calculate an estimated value $L_c^*$ of displacement of the retroreflector 10, a multiplier (or a constant multiplier) 44 for multiplying an estimated value $L_c^*$ of displacement of the retroreflector 10 by a compensation gain $K_f$, which is given as $0 < K < 1$, a differentiator 46 for differentiating the same to generate a compensation signal $V_f$ of target speed of the carriage 22, and an adder 48 for adding a compensation signal $V_f$ to a signal obtained by multiplying a tracking deviation $\Delta L_f$ by gain $K_p$ of the tracking control system to generate a target speed $V_{ar}$ of the carriage 22 are added.

The following are reference numerals newly defined in Fig. 3.

$\Delta L_f$: tracking deviation (m) to which the servo mechanism of the present invention is applied

$K_{mn}$: nominal value of conversion factor 1 ($K_m$) (set so as to be $K_{mn} = 1/K_{rn} = D \sin \Theta_a$)

$L_c^*$: estimated value (m) of displacement of retroreflector 10

$K_f$: compensation gain for compensating tracking deviation $\Delta L_f$ ($0 < K < 1$)

$V_f$: compensation signal of target speed of carriage 22

The following expressions are established for a tracking deviation $\Delta L_f$ of the first embodiment.

$$L_c^* = \Delta L_f + K_{mn}\Theta_a \quad \dots \quad (2)$$

$$d\Theta_{ar}/dt = K_{rn}(K_p\Delta L_f + K_f L_c^* s) \quad \dots \quad (3)$$

$$\Theta_a = (G_{vr}G_{mech})/s \cdot (d\Theta_{ar}/dt) \quad \dots \quad (4)$$

$$\Delta L_f = \Delta L_c - K_m\Theta_a \quad \dots \quad (5)$$

Thereby, the tracking deviation $\Delta L_f$ will be assumed to be as follows.

$$\Delta L_f = \frac{s(1 - K_f K_{mn} K_{rn} G_{vr} G_{mech})}{s\{1 - (K_f K_{rn} G_{vr} G_{mech})(K_{mn} - K_m)\} + K_p K_m K_{rn} G_{vr} G_{mech}} \Delta L_c \quad \cdots \quad (6)$$

Further, a tracking deviation $\Delta L_f$ where the retroreflector 10 moves at a constant speed will be obtained as follows by giving $\Delta L_c$ in the expression (6) to

$$\Delta L_c = V/s^2 \quad \dots \quad (7)$$

and using a final value theorem of Laplace transformation in control engineering.

$$\Delta L_f = \lim_{s \to 0} s \cdot \frac{s(1 - K_f K_{mn} K_{rn} G_{vr} G_{mech})}{s\{1 - (K_f K_{rn} G_{vr} G_{mech})(K_{mn} - K_m)\} + K_p K_m K_{rn} G_{vr} G_{mech}} \Delta L_c$$

$$= \lim_{s \to 0} s \cdot \frac{s(1 - K_f K_{mn} K_{rn} G_{vr} G_{mech})}{s\{1 - (K_f K_{rn} G_{vr} G_{mech})(K_{mn} - K_m)\} + K_p K_m K_{rn} G_{vr} G_{mech}} \cdot \frac{V}{s^2} \quad \cdots (8)$$

$$= \lim_{s \to 0} \frac{1 - K_f K_{mn} K_{rn} G_{vr} G_{mech}}{s\{1 - (K_f K_{rn} G_{vr} G_{mech})(K_{mn} - K_m)\} + K_p K_m K_{rn} G_{vr} G_{mech}} \cdot V$$

$$= \frac{1 - K_f K_{mn} K_{rn} G_{vr} G_{mech}}{K_p K_m K_{rn} G_{vr} G_{mech}} \cdot V$$

Here, with consideration given to a fact that $G_{mech}$ is expressed by the expression (1), $\Delta L_f$ may be expressed by the following expression.

$$\Delta L_f = \lim_{s \to 0} \frac{1 - K_f K_{mn} K_{rn} G_{vr} G_{mech}}{K_p K_m K_{rn} G_{vr} G_{mech}} \cdot V$$

$$= \frac{1 - K_f K_{mn} K_{rn} G_{vr}}{K_p K_m K_{rn} G_{vr}} \cdot V \quad \cdots (9)$$

On the other hand, a tracking deviation $\Delta L$ of a conventional technology shown in Fig. 2 may be obtained as follows by giving $K_f = 0$ in the expression (9).

$$\Delta L = 1/(K_p K_m K_{rn} G_{vr}) \cdot V \quad \ldots \quad (10)$$

From the expressions (9) and (10), a relationship between $\Delta L_f$ and $\Delta L$ will be expressed as follows:

$$\Delta L_f = (1 - K_f K_{mn} K_{rn} G_{vr}) \Delta L \quad \ldots \quad (11)$$

Here, as described above, the following relationship is established.

$$K_{mn} = 1/K_{rn} \quad \ldots \quad (12)$$

Further, normally, a response of characteristics $G_{vr}$ in a controller which controls a rotational speed of the carriage 22 is sufficiently fast as compared with a response of other elements and may be considered as $G_{vr} \approx 1$. Thus, the expression (11) may be approximated as follows.

$$\Delta L_f \approx (1 - K_f) \Delta L \quad \ldots \quad (13)$$

Since a compensation gain $K_f$ is, as described above, given as $0 < K_f < 1$, it may be made into $(1 - K_f) < 1$, and the present invention is effective in reducing a tracking deviation of a conventional technology to $(1 - K_f)$ times.

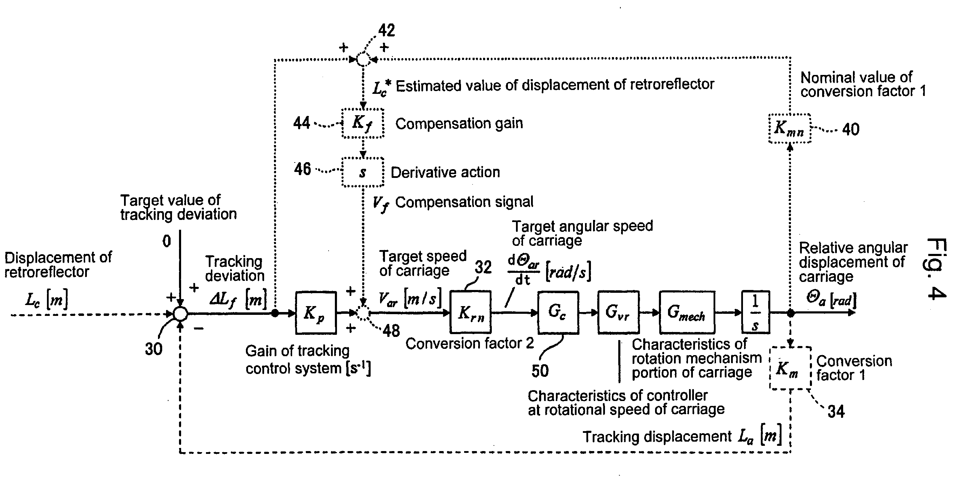

Fig. 4 shows a second embodiment in which a vibration control compensator 50 for suppressing a vibration mode which is included in characteristics $G_{mech}$ of a rotation mechanism inside a tracking control system is added to the first embodiment. The following is a reference numeral newly defined in Fig. 4.

$G_c$: vibration control compensator for suppressing a vibration mode included in characteristics $G_{mech}$ of rotation mechanism portion of carriage 22 inside a tracking control system

The vibration control compensator 50 may include a lowpass filter or a compensator having phase-lead-lag characteristics. An example of the lowpass filter is shown in the expressions (14) and (15), while an example of a compensator having phase-lead-lag characteristics is shown in the expressions (16) and (17).

$$G_c = \frac{1}{1+T_c s} \qquad ; where, \quad T_c \geq \frac{1}{\omega_n} \qquad \cdots (1\,4)$$

$$G_c = \frac{1}{(1+T_c s)^2} \qquad ; where, \quad T_c \geq \frac{1}{\omega_n} \qquad \cdots (1\,5)$$

$$G_c = \frac{1+T_z s}{1+T_p s} \qquad ; where, \quad T_p < \frac{1}{\omega_n} < T_z \qquad \cdots (1\,6)$$

$$G_c = \frac{\omega_p^2}{\omega_z^2} \cdot \frac{s^2 + 2\zeta_z \omega_z s + \omega_z^2}{s^2 + 2\zeta_p \omega_p s + \omega_p^2} \qquad ; where, \quad \omega_z < \omega_n < \omega_p \qquad \cdots (1\,7)$$

Here, $T_c$ is a time constant of the lowpass filter, $T_z$ is a time constant to designate zero point of the compensator having phase-lead-lag characteristics, Tp is a time constant to designate pole of the compensator having phase-lead-lag characteristics.

Hereinafter, simulation results showing specific effects of the first and the second embodiments are shown. Characteristics $G_{mech}$ of a rotation mechanism portion of the carriage 22 are to be expressed by the expression (1), and a natural angular frequency (rad/s) and a damping ratio in a vibration mode are respectively given as $\omega_n = 2n \times 50$ and $\zeta = 0.1$.

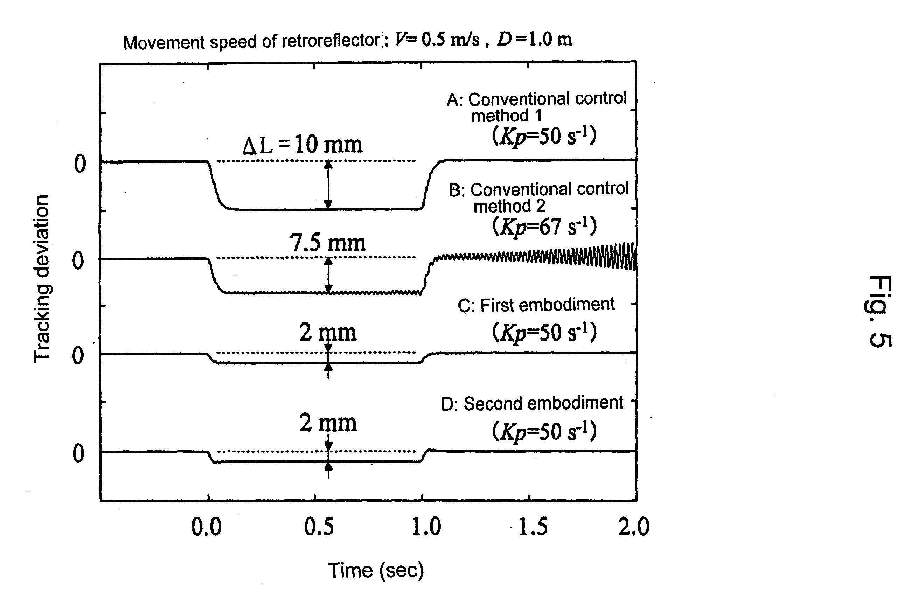

Fig. 5 shows simulation results of a tracking deviation $\Delta L_f$ in which a distance between the laser interferometer 24 and the retroreflector 10 is given as D = 1 m and the retroreflector 10 moves at a constant speed of V = 0.5 m/s.

The solid line A indicated in Fig. 5 shows a tracking deviation of a conventional technology. The solid line A is a response in a case where a gain of the tracking control system is set to be $K_p = 50s^{-1}$, so that the tracking deviation is free from vibration behaviors. In this instance, the tracking deviation is $\Delta L = 10$ mm. The solid line B indicated in Fig. 5 shows a result where a gain of the tracking control system is set to be $K_p = 67s^{-1}$. In the solid line B, although the tracking deviation is reduced to $\Delta L = 7.5$ mm, the response is vibrational and no further increase in gain can be obtained.

The solid line C indicated in Fig. 5 is a tracking deviation found in the first embodiment. The solid line C is a response in a case where a gain of the tracking control system is set to be $K_p = 50s^{-1}$, as with the solid line A, and the compensation gain is set to be $K_f = 0.8$. It is possible to reduce the tracking deviation to $(1 - K_f)$ times, as compared with a conventional technology, that is, 0.2 times or $\Delta L_f = 2$ mm.

The solid line D indicated in Fig. 5 is a tracking deviation found in the second embodiment. This is a response in a case where the expression (14) is applied as a vibration control compensator 50 and time constant $T_c$ is set to be $T_c = 1/(2\pi \times 50)$. It is possible to suppress small vibrational behaviors as shown in the solid line C.

It is apparent that the present invention is to provide a servo mechanism for reducing a tracking deviation independent of a gain of a tracking control system.

**Claims**

1. A tracking type laser interferometer, comprising:

   means for irradiating a laser beam to a retroreflector (10) or an object to be measured,

a carriage (22) onto which the laser interferometer (24) is mounted,

the carriage (22) being arranged to rotate around a turning center which is fixed and placed,

means to use the interference of the laser beam reflected in a returning direction by the retroreflector (10) to detect a displacement of the retroreflector (10),

means to carry out tracking using a tracking deviation detected as positional change of an optical axis of the laser beam, thereby controlling the rotation of the carriage (22), and

a servo mechanism, comprising:

means for adding a tracking deviation ($\Delta L_f$) to a signal obtained by multiplying a relative angular displacement ($\theta_a$) of the carriage (22) by a nominal value ($K_{mn}$) of a conversion factor ($K_m$), thereby calculating an estimated value ($L_c^*$) of displacement of the retroreflector (10);

means for multiplying the estimated value ($L_c^*$) of displacement of the retroreflector (10) by a compensation gain ($K_f$) which is given as $0 < K_f < 1$ and differentiating the same to generate a compensation signal ($V_f$) of a target speed of the carriage (22); and

means for adding a compensation signal ($V_f$) to a signal obtained by multiplying the tracking deviation ($\Delta L_f$) by a gain ($K_p$) of the tracking control system to generate a target speed ($V_{ar}$) of the carriage (22).

2. The tracking type laser interferometer according to claim 1, wherein the means for calculating an estimated value ($L_c^*$) of displacement of the retroreflector (10) includes a multiplier (40) for multiplying the relative angular displacement ($\theta_a$) of the carriage (22) by the nominal value ($K_{mn}$) of the conversion factor ($K_m$) and an adder (42) for adding the tracking deviation ($\Delta L_f$) to an output signal of the multiplier (40).

3. The tracking type laser interferometer according to claim 1, wherein the means for generating the compensation signal ($V_f$) of target speed of the carriage (22) includes a multiplier (44) for multiplying the estimated value ($L_c^*$.) of displacement of the retroreflector (10) by the compensation gain ($K_f$) which is given as $0 < K < 1$ and a differentiator (46) for differentiating the same.

4. The tracking type laser interferometer according to claim 1, wherein the means for generating the target speed ($V_{ar}$) of the carriage (22) includes an adder (48) for adding the compensation signal ($V_f$) to a signal obtained by multiplying the tracking deviation ($\Delta L_f$) by the gain ($K_p$) of the tracking control system.

5. The tracking type laser interferometer according to claim 1, wherein the servo mechanism is provided with a vibration control compensator (50) for suppressing a vibration mode included in characteristics ($G_{mech}$) of a mechanism portion inside the tracking control system.

6. The tracking type laser interferometer according to claim 5, wherein the vibration control compensator (50) is a lowpass filter.

7. The tracking type laser interferometer according to claim 5, wherein the vibration control compensator (50) is a compensator having phase-lead-lag characteristics.

**Patentansprüche**

1. Nachführendes Laser-Interferometer, das umfasst:

eine Einrichtung, mit der ein Laserstrahl auf einen Retroreflektor (10) oder ein zu messendes Objekt gerichtet wird,

einen Wagen (22), an dem das Laser-Interferometer (24) angebracht ist,

wobei der Wagen (22) so eingerichtet ist, dass er sich um einen Drehmittelpunkt herum dreht, der fixiert und positioniert ist,

eine Einrichtung, die die Interferenz des in einer Rückkehrrichtung durch den Retroreflektor (10) reflektierten Laserstrahls nutzt, um eine Verschiebung des Retroreflektors (10) zu erfassen,

eine Einrichtung, die Nachführung unter Verwendung einer Nachführabweichung ausführt, die als Positionsänderung einer optischen Achse des Laserstrahls erfasst wird, um so die Drehung des Wagens (22) zu steuern, und

einen Servomechanismus, der umfasst:

eine Einrichtung, mit der eine Nachführ-Abweichung ($\Delta L_f$) zu einem Signal addiert wird, das gewonnen wird, indem eine relative Winkelverschiebung ($\theta_a$) des Wagens (22) mit einem Nennwert ($K_{mn}$) eines Umwandlungsfaktors ($K_m$) multipliziert wird, um so einen Schätzwert ($L_c^*$) der Verschiebung des Retroreflektors (10) zu berechnen;

eine Einrichtung, mit der der Schätzwert ($L_c^*$) der Verschiebung des Retroreflektors (10) mit einem Kompensationsverstärkungsfaktor ($K_f$) multipliziert wird, der mit $0 < K_f < 1$ gegeben ist, und dieser differenziert wird, um ein Kompensationssignal ($V_f$) einer Sollgeschwindigkeit des Wagens (22) zu erzeugen; und

eine Einrichtung, mit der ein Kompensationssignal ($V_f$) zu einem Signal addiert wird, das gewonnen wird, indem die Nachführ-Abweichung ($\Delta L_f$) mit einem Verstärkungsfaktor ($K_p$) des Nachführ-Steuersystems multipliziert wird, um eine Sollgeschwindigkeit ($V_{ar}$) des Wagens (22) zu erzeugen.

2. Nachführ-Laserinterferometer nach Anspruch 1, wobei die Einrichtung zum Berechnen eines Schätzwertes ($L_c^*$) der Verschiebung des Retroreflektors (10) ein Multiplizierglied (40) zum Multiplizieren der relativen Winkelverschiebung ($\theta_a$) des Wagens (22) mit dem Nennwert ($K_{mn}$) des Umwandlungsfaktors ($K_m$) sowie ein Addierglied (42) zum Addieren der Nachführ-Abweichung ($\Delta L_f$) zu einem Ausgangssignal des Multipliziergliedes (40) enthält.

3. Nachführ-Laserinterferometer nach Anspruch 1, wobei die Einrichtung zum Erzeugen des Kompensationssignals ($V_f$) der Sollgeschwindigkeit des Wagens (22) ein Multiplizierglied (44) zum Multiplizieren des Schätzwerts ($L_c^*$) der Verschiebung des Retroreflektors (10) mit dem Kompensationsverstärkungsfaktor ($K_f$), der mit $0 < K < 1$ gegeben ist, sowie ein Differenzierglied (46) zum Differenzieren desselben enthält.

4. Nachführ-Laserinterferometer nach Anspruch 1, wobei die Einrichtung zum Erzeugen der Sollgeschwindigkeit ($V_{ar}$) des Wagens (22) ein Addierglied (48) enthält, mit dem das Kompensationssignal ($V_f$) zu einem Signal addiert wird, das gewonnen wird, indem die Nachführ-Abweichung ($\Delta L_f$) mit dem Verstärkungsfaktor ($K_p$) des Nachführ-Steuersystems multipliziert wird.

5. Nachführ-Laserinterferometer nach Anspruch 1, wobei der Servomechanismus mit einem Schwingungssteuer-Kompensator (50) versehen ist, mit dem eine Schwingungsmode unterdrückt wird, die in der Charakteristik ($G_{mech}$) eines Mechanismusabschnitts innerhalb des Nachführ-Steuersystems unterdrückt wird.

6. Nachführ-Laserinterferometer nach Anspruch 5, wobei der Schwingungssteuer-Kompensator (50) ein Tiefpassfilter ist.

7. Nachführ-Laserinterferometer nach Anspruch 5, wobei der Schwingungssteuer-Kompensator (50) ein Kompensator mit Phasen-Voreil-Nacheil-Charakteristik ist.

**Revendications**

1. Interféromètre laser de type suivi, comprenant :

un moyen pour irradier un faisceau laser vers un rétroréflecteur (10) ou un objet à mesurer,
un chariot (22) sur lequel l'interféromètre laser (24) est monté,
le chariot (22) étant agencé pour tourner autour d'un centre de rotation qui est fixe et placé,
un moyen pour utiliser l'interférence du faisceau laser réfléchi dans une direction de retour par le rétroréflecteur (10) afin de détecter un déplacement du rétroréflecteur (10),
un moyen pour effectuer un suivi en utilisant un écart de suivi détecté en tant que modification positionnelle d'un axe optique du faisceau laser, en commandant ainsi la rotation du chariot (22), et
un servomécanisme, comprenant :

un moyen pour ajouter un écart de suivi ($\Delta L_f$) à un signal obtenu en multipliant un déplacement angulaire relatif ($\theta_a$) du chariot (22) par une valeur nominale ($K_{mn}$) d'un facteur de conversion ($K_m$), en calculant ainsi une valeur estimée ($L_c^*$) de déplacement du rétroréflecteur (10) ;
un moyen pour multiplier la valeur estimée ($L_c^*$) de déplacement du rétroréflecteur (10) par un gain de compensation ($K_f$) qui est donné comme $0 < K_f < 1$ et pour différencier celle-ci afin de générer un signal de compensation ($V_f$) d'une vitesse cible du chariot (22) ; et
un moyen pour ajouter un signal de compensation ($V_f$) à un signal obtenu en multipliant l'écart de suivi ($\Delta L_f$) par un gain ($K_p$) du système de commande de suivi afin de générer une vitesse de cible ($V_{ar}$) du chariot (22).

**2.** Interféromètre laser de type suivi selon la revendication 1, dans lequel le moyen pour calculer une valeur estimée ($L_c^*$) de déplacement du rétroréflecteur (10) comprend un multiplicateur (40) pour multiplier le déplacement angulaire relatif ($\theta_a$) du chariot (22) par la valeur nominale ($K_{mn}$) du facteur de conversion ($K_m$), et un additionneur (42) pour ajouter l'écart de suivi ($\Delta L_f$) à un signal de sortie du multiplicateur (40).

**3.** Interféromètre laser de type suivi selon la revendication 1, dans lequel le moyen pour générer le signal de compensation ($V_f$) de la vitesse de cible du chariot (22) comprend un multiplicateur (44) pour multiplier la valeur estimée ($L_c^*$) de déplacement du rétroréflecteur (10) par le gain de compensation ($K_f$) qui est donné comme $0 < K < 1$ et un différenciateur (46) pour différencier celle-ci.

**4.** Interféromètre laser de type suivi selon la revendication 1, dans lequel le moyen pour générer la vitesse de cible ($V_{ar}$) du chariot (22) comprend un additionneur (428) pour ajouter le signal de compensation ($V_f$) à un signal obtenu en multipliant l'écart de suivi ($\Delta L_f$) par le gain ($K_p$) du système de commande de suivi.

**5.** Interféromètre laser de type suivi selon la revendication 1, dans lequel le servomécanisme est doté d'un compensateur de commande de vibration (50) pour supprimer un mode de vibration inclus dans des caractéristiques ($G_{mech}$) d'une portion de mécanisme à l'intérieur du système de commande de suivi.

**6.** Interféromètre laser de type suivi selon la revendication 5, dans lequel le compensateur de commande de vibration (50) est un filtre passe-bas.

**7.** Interféromètre laser de type suivi selon la revendication 5, dans lequel le compensateur de commande de vibration (50) est un compensateur ayant des caractéristiques d'avance-retard de phase.

# Fig. 1

# Fig. 2

Fig. 2 — Control block diagram.

- Displacement of retroreflector: $L_c$ [m]
- Target value of tracking deviation: 0
- Tracking deviation: $\Delta L$ [m]
- 30
- $K_p$ — Gain of tracking control system [s⁻¹]
- Target speed of carriage: $V_{ar}$ [m/s]
- 32 — $K_{rn}$ — Conversion factor 2
- Target angular speed of carriage: $\dfrac{d\Theta_{ar}}{dt}$ [rad/s]
- $G_{vr}$ — Characteristics of controller of carriage rotational speed
- $G_{mech}$ — Characteristics of rotation mechanism portion of carriage
- $\dfrac{1}{s}$
- Relative angular displacement of carriage: $\Theta_a$ [rad]
- $K_m$ — Conversion factor 1 — 34
- Tracking displacement $L_a$ [m]

11

42

+ +

$L_c^*$ Estimated value of displacement of retroreflector

Nominal value of conversion factor 1

44 --- $K_f$ Compensation gain

$K_{mn}$ --- 40

46 --- $s$ Derivative action

$V_f$ Compensation signal

Target value of tracking deviation

0

Target angular speed of carriage

Displacement of retroreflector

$L_c$ [m]

Tracking deviation

$\Delta L_f$ [m]

Target speed of carriage

$V_{ar}$ [m/s]

$\dfrac{d\Theta_{ar}}{dt}$ [rad/s]

Relative angular displacement of carriage

$\Theta_a$ [rad]

$K_p$

32

$K_{rn}$

$G_{vr}$

$G_{mech}$

$\dfrac{1}{s}$

+

+

48

30

Gain of tracking control system [s⁻¹]

Conversion factor 2

Characteristics of rotation mechanism portion of carriage

$K_m$ Conversion factor 1

34

Characteristics of controller at rotational speed of carriage

Tracking displacement $L_a$ [m]

Fig. 3

12

Fig. 4

EP 2 112 464 B1

# Fig. 5

Movement speed of retroreflector; $V= 0.5$ m/s , $D =1.0$ m

A: Conventional control method 1 ($Kp=50$ s$^{-1}$)

B: Conventional control method 2 ($Kp=67$ s$^{-1}$)

C: First embodiment ($Kp=50$ s$^{-1}$)

D: Second embodiment ($Kp=50$ s$^{-1}$)

$\triangle L =10$ mm

7.5 mm

2 mm

2 mm

Tracking deviation

Time (sec)

**EP 2 112 464 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007057522 A
- JP 2002098510 A